Europäisches Patentamt

**European Patent Office**

Office européen des brevets

(19)

(11) Numéro de publication: **0 030 171**
**B1**

(12) **FASCICULE DE BREVET EUROPEEN**

(45) Date de publication du fascicule du brevet: **03.10.84**

(51) Int. Cl.³: **C 08 F 10/02, C 08 F 4/64**

(21) Numéro de dépôt: **80401539.4**

(22) Date de dépôt: **30.10.80**

(54) **Procédé de préparation de polymères d'éthylène de moyenne densité et polymères d'éthylène obtenus.**

(30) Priorité: **28.11.79 FR 7929234**

(43) Date de publication de la demande:
**10.06.81 Bulletin 81/23**

(45) Mention de la délivrance du brevet:
**03.10.84 Bulletin 84/40**

(84) Etats contractants désignés:
**DE GB NL**

(56) Documents cités:
**FR-A-1 356 584**
**FR-A-2 090 973**
**FR-A-2 202 898**
**US-A-2 882 264**

(73) Titulaire: **ATO CHIMIE**
**La Défense 5 12/16 Allée des Vosges**
**F-92400 Courbevoie (FR)**

(72) Inventeur: **Gouarderes, René**
**4, Rue Gustave Charpentier**
**F-64000 Pau (FR)**

(74) Mandataire: **Boillot, Marc**
**SOCIETE NATIONALE ELF AQUITAINE**
**Département Propriété Industrielle Tour**
**Aquitaine - Cedex No 4**
**F-92080 Paris la Défense (FR)**

Courier Press, Leamington Spa, England.

## Description

L'invention concerne un procédé de préparation de polymères d'éthylène de moyenne densité, dans lequel on polymérise de l'éthylène ou un mélange d'éthylène et d'une faible quantité d'un comonomère, en masse et sous des pressions d'au moins 800 bars, au moyen d'un système catalytique comprenant un titanate d'alcoyle et un alcoylaluminium de formule $AlY_xR_{(3-x)}$, dans laquelle R représente un radical alcoyle en $C_1$ à $C_6$, x est un nombre pouvant prendre les valeurs de 0 à 2,5 et Y désigne un atome d'halogène.

Les polymères d'éthylène de moyenne densité, c'est-à-dire suivant l'invention de densité comprise entre 0,929 et 0,950, allient certaines propriétés, et en particulier la résistance mécanique, des polymères d'éthylène de haute densité, c'est-à-dire de densité supérieure à 0,960, à certaines propriétés, et notamment à la souplesse, des polymères d'éthylène de basse densité, c'est-à-dire de densité inférieure à 0,928, et de ce fait ils se révèlent intéressants pour certaines applications comme le gaînage des câbles de télécommunications, les films rigides pour emballage automatique, ou encore les objets moulés de haute rigidité.

On sait que des polymères d'éthylène de moyenne densité peuvent être produits par polymérisation d'éthylène, en masse sous haute pression et à des températures élevées, au moyen d'un système catalytique du type Ziegler, formé par l'association d'un composé de titane avec un composé organique de l'aluminium.

Ainsi le brevet américain 2.882.264 décrit la préparation de polyéthylène de densité allant de 0,934 à 0,949 par polymérisation de l'éthylène à des températures supérieures à 200°C et sous des pressions supérieures à 800 bars en faisant appel à un système catalytique constitué par le produit de réaction de tétrachlorure de titane sur un trialcoylaluminium tel que le tri-isobutylaluminium, ledit produit de réaction étant injecté dans la zone réactionnelle sous la forme d'une dispersion dans un diluant liquide inerte.

Un procédé analogue, proposé dans le brevet français N° 72 36443 (publication N° 2.202.898), permet de préparer des polyéthylènes de densité allant de 0,930 à 0,949, en polymérisant de l'éthylène sous des pressions supérieures à 1000 bars et à des températures d'au moins 240°C en faisant appel à un système catalytique comprenant un trichlorure de titane et un alcoylaluminium, tel que triéthylaluminium, ou monochlorure d'aluminium diéthyle, et modifié par un alcoolate de titane, notamment tétrapropylate de titane, ou une huile de silicone.

Ces procédés haute pression font appel à des systèmes catalytiques qui se présentent sous une forme solide et de ce fait sont utilisables sous la forme de dispersion dans un liquide diluant. Au cours de l'injection d'une telle dispersion dans la zone de polymérisation sous pression, il peut se produire des bouchages des conduits de faible diamètre ou des organes microdoseurs dans lesquels circule ladite dispersion, avec comme conséquences des perturbations dans le déroulement de la polymérisation.

L'exemple 7 du brevet français précité montre également qu'il est possible de polymériser l'éthylène en masse sous haute pression, en utilisant des catalyseurs de type Ziegler solubles dans des solvants inertes et résultant de l'association d'un titanate d'alcoyle, notamment titanate de propyle, avec une alcoylaluminium tel que tri-éthylaluminium, et en opérant à une température de 260°C, mais dans ce cas le polyéthylène obtenu est un polyéthylène basse densité.

On a maintenant trouvé que des polymères d'éthylène de moyenne densité pouvaient être obtenus par polymérisation d'éthylène ou de mélanges d'éthylène et d'une faible quantité d'un comonomère, en opérant en masse, sous des pressions supérieures à 800 bars, et en présence de catalyseurs solubles résultant de l'association d'un titanate d'alcoyle avec un alcoylaluminium, lorsque la polymérisation était mise en oeuvre à des températures spécifiques pouvant être notablement inférieures à 260°C, ce qui permet de remédier aux inconvénients des procédés haute pression précités faisant appel à des systèmes catalytiques solides.

Le procédé suivant l'invention pour la préparation de polymères d'éthylène de moyenne densité, dans lequel on polymérise de l'éthylène ou un mélange d'éthylène et d'une faible quantite d'un comonomère, en masse et sous des pressions d'au moins 800 bars, au moyen d'un système catalytique comprenant un titanate d'alcoyle et un alcoylaluminium de formule $AlY_xR_{(3-x)}$, dans laquelle R représente un radical alcoyle en $C_1$ à $C_6$, x est un nombre allant de 0 à 2,5 et Y désigne un atome d'halogène, est caractérisé en ce qu'on effectue la polymérisation à des températures choisies dans l'intervalle allant de $(\theta - 40)°C$ à $(\theta + 38)°C$, avec $\theta = 150 + 30x$.

Les polymères d'éthylène de moyenne densité, que l'on peut préparer suivant l'invention, peuvent être des homopolyéthylènes, c'est-à-dire résulter de l'homopolymérisation de l'éthylène, ou encore des copolymères de l'éthylène et d'une faible quantité d'un comonomère, c'est-à-dire résulter de la copolymérisation dun mélange d'éthylène et d'une faible quantité, en général quelques pour cents molaires environ par rapport à l'éthylène, du comonomère, par exemple propène, butène-1.

Les pressions utilisées pour la polymérisation peuvent aller de 800 à 3500 bars et se situent plus particulièrement entre 1000 et 2400 bars.

Les titanates employés en association avec le composé alcoylaluminium pour constituer le système catalytique utilisé dans le procédé suivant l'invention peuvent être définis par la formule Ti(OR$_1$)$_4$ dans laquelle les R$_1$, identiques ou différents, désignent des radicaux alcoyles en C$_1$ à C$_6$ et de préférence en C$_2$ à C$_4$. Ces titanates sont par exemple tels que titanate de tétra n-butyle, titanate de tétraisopropyle, titanate de tétra éthyle, titanate de tétra n-propyle.

Le composé d'alcoylaluminium, dont la formule générale est indiquée plus haut, est plus particulièrement un composé de formula AlCl$_x$ R$_{(3-x)}$, dans laquelle R et x ont les significations déjà données précédemment, avec de préférence R représentant un radical alcoyle en C$_2$ à C$_4$ et x désignant un nombre prenant les valeurs 0, 1, 3/2, et 2. Des exemples du composé alcoylaluminium sont tels que tri-alcoylaluminium, comme tri-éthylaluminium, tri-iso-propylaluminium, tri-n-propylaluminium, tri-isobutylaluminium, tri n-butylaluminium chlorures de dialcoylaluminium comme chlorure de di-éthylaluminium (ClAl(C$_2$H$_5$)$_2$), dichlorures d'al-coylaluminium comme dichlorure d-éthylalu-minium (Cl$_2$AlC$_2$H$_5$), ou encore sesquichlorures d'alcoylaluminium comme sesquichlorure d'éthylaluminium.

Le système catalytique peut être préformé avant son introduction dans la zone de polymérisation ou encore être formé dans ladite zone. Lorsque le système catalytique est préformé, le constituant titanate et le constituant alcoylaluminium sont mis en réaction dans un solvant inerte, par exemple hydrocarbure aliphatique, cycloaliphatique ou aromatique, et la solution du produit de réaction, diluée à la concentration désirée, est injectée dans la zone de réaction, cette injection pouvant être réalisée en une seule fois au début de la polymérisation ou encore par fractions ou en continu tout au long de la polymérisation. Lorsque le système catalytique est formé dans la zone de polymérisation, le constituant titanate et le constituant alcoylaluminium sont injectés séparément dans la zone de polymérisation sous la forme d'une solution dans un solvant inerte, par exemple un hydrocarbure aliphatique, cycloaliphatique, ou aromatique, ces injections pouvant être effectuées en une seule fois au début de la polymérisation ou encore par fractions ou en continu tout au long de la polymérisation.

Les proportions relatives du constituant titanate et du constituant alcoylaluminium, associées pour constituer le système catalytique, peuvent varier assez largement. Lesdites proportions sont avantageusement telles que, dans le système catalytique préformé ou formé directement dans la zone de polymérisation, le rapport du nombre d'atomes d'aluminium au nombre d'atomes de titane soit compris entre 2 et 10 et de préférence entre 2 et 8.

La quantité de système catalytique préformé ou formé in situ, c'est-à-dire directement dans la zone de polymérisation, à employer pour catalyser l'homopolymérisation ou la copolymérisation de l'éthylène n'est pas critique, toutefois il est préférable d'éviter un trop grand excès de système catalytique pour ne pas augmenter inutilement le taux de cendres du polymère obtenu. Avantageusement la quantité de système catalytique à utiliser est telle qu'il y ait 5.10$^{-6}$ à 200.10$^{-6}$, et de préférence 8.10$^{-6}$ à 100.10$^{-6}$, atome de titane par molécule d'éthylène dans le mélange réactionnel à polymériser.

La polymérisation peut être conduite en présence d'agents de transfert de chaînes, en particulier hydrogène, pour assurer un contrôle des masses moléculaires du polymère obtenu, ou encore en présence d'additifs ne modifiant pas le déroulement de la réaction, par exemple diluant gazeux. Les quantités d'agent de transfert à utiliser correspondent à celles préconisées dans l'art, et se situent le plus souvent autour de 0,1 à 2% molaire par rapport à l'éthylène.

Lorsque le constituant alcoylaluminium du système catalytique est un trialcoylaluminium, c'est-à-dire un composé de formule Al(R)$_3$, avec R désignant un radical alcoyle en C$_1$ à C$_6$ et de préférence en C$_2$ à C$_4$, notamment tri-éthyl-aluminium ou tri-isobutylaluminium, les tem-pératures de polymérisation sont choisies plus particulièrement entre 120°C et 188°C et de préférence entre 130°C et 185°C. Pour un constituant alcoylaluminium du type chlorure de dialcoylaluminium de formule ClAl(R)$_2$, R ayant la signification précédente, et par exemple pour le chlorure de diéthylaluminium, les températures de polymérisation sont choisies plus particulièrement entre 150°C et 210°C et de préférence entre 160°C et 200°C. Lorsque le constituant alcoylaluminium est un dichlorure d'alcoylaluminium de formule Cl$_2$AlR, R ayant la définition ci-dessus, et par exemple le dichlorure d'éthylaluminium, les températures de polymérisation sont comprises entre 170°C et 248°C et de préférence entre 190°C et 248°C.

La polymérisation peut être mise en oeuvre de manière discontinue en opérant dans un réacteur du type autoclave agité et fermé ou encore de manière continue en opérant dans un réacteur du type autoclave agité ou du type réacteur tubulaire équipés d'une vanne de régulation de pression, ces réacteurs correspondant à ceux couramment utilisés pour effectuer la polymérisation de l'éthylène sous haute pression.

Le temps de séjour du milieu réactionnel renfermant l'éthylène, le système catalytique, et les additifs éventuels, dans la zone de polymérisation peut varier très largement suivant que la polymérisation est mise en oeuvre de manière discontinue ou de manière continue. Par exemple en opération continue, comme c'est le cas notamment pour une mise en oeuvre en réacteur tubulaire, le temps de séjour du milieu réactionnel dans la zone de polymérisation, c'est-à-dire la zone où règnent les conditions de pression et de température appropriées, est généralement inférieur à 150 secondes, et plus particulièrement compris entre 25 et 70 secondes.

L'invention est illustrée par les exemples suivants donnés à titre non limitatif.

### Exemple 1

On opérait en discontinu dans un réacteur du type autoclave agité et fermé. Dans ledit réacteur maintenu à une température de 176,5°C on comprimait 17,51 moles d'éthylène en présence d'hydrogène (1% molaire par rapport à l'éthylène) comme agent de transfert de chaînes, puis introduisait 34,9 p.p.m. molaires de dichlorure d'éthylaluminium en solution dans l'heptane. La pression dans le réacteur était alors de 1510 bars et la température égale à 176,5°C. Au contenu du réacteur on ajoutait alors 6,2 p.p.m. molaires de titanate de tétra n-butyle en solution dans l'heptane, ce qui entrainait le démarrage de la réaction de polymérisation. La température dans le réacteur s'élevait lentement jusqu'à 180°C tandis que la pression atteignait un maximum de 1524 bars. Au bout de 38 minutes, la température était revenue à 177°C et la pression se stabilisait à 1274 bars, ceci indiquant la fin de la polymérisation. On recueillait 45,60 g d'un polyéthylène présentant une densité égale à 0,9393 et un indice de fusion, déterminé dans les conditions de la norme ASTM-D 1238-62T, ayant une valeur égale à zéro. Des échantillons de ce polyéthylène soumis à un recuit suivi d'un refroidissement lent présentaient un point de fusion égal à 120,5°C.

### Exemple 2

On opérait en discontinu dans un réacteur du type autoclave agité et fermé. Dans le réacteur fermé on comprimait 17,46 moles d'éthylène, puis on y introduisait ensuite une solution dans l'heptane du produit résultant de la réaction préalable de 31,8 p.p.m. molaires de dichlorure d'éthylaluminium avec 13,30 p.p.m. molaires de titanate de tétra n-butyle. La pression dans le réacteur était alors de 1505 bars et la température égale à 177°C. La température s'élevait très lentement. On arrêtait volontairement la réaction au bout d'une heure, alors que la pression était encore de 1330 bars et que la température atteignait 185°C. On obtenait 44,4 g d'un polyéthylène dont les caractéristiques sont données ci-après:

| | |
|---|---|
| — densité | : 0,930 |
| — indice de fusion | : 0 |
| — température de fusion | : 118°C |
| — nombre de $CH_3$ pour 1000 carbones | : 14,7 |

| | |
|---|---|
| — doubles liaisons pour 1000 carbones | |
| — trans | : 0,008 |
| — vinyl | : 0,023 |
| — vinylidène | : 0,085 |

### Exemple 3

On opérait en discontinu dans un réacteur du type autoclave agité et fermé. Dans le réacteur fermé maintenu à 177°C on comprimait 17,44 moles d'éthylène en présence d'hydrogène (1,5% molaire par rapport à l'éthylène) comme agent de transfert de chaîne, puis on introduisait 75 p.p.m. molaires de dichlorure d'éthylaluminium en solution dans l'heptane. La pression dans le réacteur était alors de 1490 bars et la température égale à 177°C. Au contenu du réacteur on ajoutait 12,4 p.p.m. molaires de titanate de tétra n-butyle en solution dans l'heptane, ce qui entrainait le démarrage de la réaction de polymérisation. La température dans le réacteur s'élevait jusqu'à 192°C tandis que la pression atteignait un maximum de 1528 bars. Au bout de 30 minutes la température était revenue à 182°C et la pression stabilisée à 1156 bars, ceci indiquant la fin de la polymérisation. On obtenait 74 g d'un polyéthylène présentant une densité de 0,943, un indice de fusion égal à 0,1, et une température de fusion de 129°C.

### Exemple 4

On opérait en discontinu dans un réacteur du type autoclave agité et fermé. Dans le réacteur fermé maintenu à 176°C on comprimait 17,6 moles d'éthylène en présence, par rapport à l'éthylène, de 1,5% molaire d'hydrogène, puis on introduisait 45,2 p.p.m. molaires de triéthylaluminium en solution dans l'heptane. La pression dans le réacteur était de 1532 bars et la température égale à 176°C. Au contenu du réacteur on ajoutait alors 7,7 p.p.m. molaires de titanate de tétra n-butyle en solution dans l'heptane. La température dans le réacteur s'élevait alors à 180,5°C tandis que la pression atteignait un maximum de 1555 bars. Au bout d'une heure la température était revenue à 176°C et la pression stabilisée à 1268 bars.

On obtenait 53 g d'un polyéthylène ayant une densité de 0,9331, un indice de fusion égal à 5,6, et un point de fusion de 115°C.

### Exemple 5

On opérait en discontinu dans un réacteur du type autoclave agité et fermé. Dans le réacteur fermé maintenu à 150°C on comprimait 18 moles d'éthylène en présence, par rapport à l'éthylène, de 1,5% molaire d'hydrogène, puis on introduisait 31 p.p.m. molaires de triéthyl- aluminium en solution dans l'heptane. La pression dans le réacteur était de 1532 bars et la température égale à 150°C. Au contenu du réacteur on ajoutait alors 6 p.p.m. molaires de titanate de tétra n-butyle et maintenait la température à une valeur égale à 150°C de manière à conduire la réaction de polymérisation de façon isotherme. On arrêtait la réaction après une durée de 20 minutes.

On obtenait 8,3 g de polyéthylène présentant une densité égale à 0,9367 et un point de fusion de 120°C.

### Exemple 6

On opérait en discontinu dans un réacteur du type autoclave agité et fermé. Dans le réacteur fermé maintenu à 140,5°C on comprimait 18,2 moles d'éthylène en présence, par rapport à l'éthylène, de 1,5% molaire d'hydrogène, puis on introduisait 46 p.p.m. molaires de triéthylaluminium en solution dans l'heptane. La pression dans le réacteur était de 1526,5 bars et la température égale à 140,5°C. Au contenu du réacteur on ajoutait alors 8 p.p.m. molaires de titanate de tétra n-butyle en solution dans l'heptane. La température dans le réacteur s'élevait alors lentement jusqu'à 146,5°C tandis que la pression atteignait un maximum de 1535 bars. Au bout de 30 minutes la température était revenue à 137,5°C et la pression stabilisée à 1442 bars.

On obtenait un polyéthylène ayant une densité de 0,9352 et un point de fusion de 121°C.

### Exemple 7

On opérait en discontinu dans un réacteur analogue à celui utilisé dans l'exemple 6. Dans le réacteur fermée on comprimait 17,5 molécules d'éthylène en présence, par rapport à l'éthylène, de 1,5% molaire d'hydrogène, puis on introduisait 46 p.p.m. molaires de chlorure de diéthylaluminium en solution dans l'heptane. La pression dans le réacteur était de 1526 bars et la température égale à 176°C. Au contenu du réacteur on ajoutait alors 7,7 p.p.m. molaires de titanate de tétra n-butyle en solution dans l'heptane. La température dans le réacteur s'élevait lentement jusqu'à 195°C tandis que la pression atteignait un maximum de 1545 bars. Au bout d'une heure la température était revenue à 182°C et la pression stabilisée à 1178 bars.

On obtenait 71,6 g de polyéthylène ayant une densité de 0,9365 et un indice de fusion égal à 0,4.

### Exemple 8

On opérait en continu dans un réacteur tubulaire muni d'une vanne de régulation de pression à sa sortie et comportant une zone de préchauffage suivie d'une zone de réaction en trois parties munies chacune d'un système de chauffe, ledit réacteur étant équipé de moyens pour l'injection en continu des constituants du système catalytique, à savoir injection du constituant alcoylaluminium dans la zone de préchauffage et injection du constituant titanate dans la première partie de la zone de réaction.

On introduisait en continu de l'éthylène, à raison de 4200 litres normaux par heure, dans la zone de préchauffage du réacteur maintenue à 215°C pour obtenir une pression de 1500 bars dans le réacteur. Dans la zone de préchauffage l'éthylène était additionné en continu de dichlorure d'éthylaluminium en solution dans l'heptane, cette addition se faisant avec un débit correspondant à $57.10^{-6}$ mole de dichlorure par mole d'éthylène. Dans la première partie de la zone de réaction le mélange d'éthylène et de dichlorure d'éthylaluminium, issu de la zone de préchauffage, était additionné de titanate de tétra n-butyle en solution dans l'heptane, cette addition étant effectuée également en continu avec un débit correspondant à $14.10^{-6}$ mole de titanate par mole d'éthylène. La température le long de la zone de réaction montait jusqu'à 233°C. Le mélange réactionnel renfermant le polyéthylène produit et l'éthylène non transformé était évacué du réacteur à travers la vanne de régulation de pression et dirigé vers un séparateur pour séparer le polyéthylène. Le temps de séjour moyen du milieu réactionnel dans la zone de réaction était de 55 secondes.

On obtenait un polyéthylène ayant une densité de 0,931 et présentant un indice de fusion égal à 4.

### Exemple 9

On opérait en continu dans un réacteur tubulaire analogue à celui utilisé pour la mise en oeuvre de l'exemple 8.

On introduisait en continu de l'éthylène dans la zone de préchauffage du réacteur maintenu à 218°C de manière à obtenir une pression de 2000 bars dans le réacteur. Dans la zone de préchauffage l'éthylène était additionné en continu de dichlorure d'éthylaluminium en solution dans l'heptane, cette addition étant réalisée avec un débit correspondant à $60.10^{-6}$ mole de dichlorure par mole d'éthylène. Dans la première partie de la zone de réaction le mélange d'éthylène et de dichlorure d'éthylaluminium, issu de la zone de préchauffage, était additionné de titanate de tétra n-butyle en solution dans l'heptane, cette addition etant effectuée en continu à raison de $16.10^{-6}$ mole de titanate par mole d'éthylène. La température le long de la zone de réaction montait jusqu'à 223°C. Le mélange réactionnel renfermant le polyéthylène produit et l'éthylène non converti était évacué du réacteur par la vanne de détente puis traité dans un séparateur pour séparer le polyéthylène. Le temps de séjour moyen du milieu réactionnel dans la zone de réaction était égal à 60 secondes.

On obtenait un polyéthylène ayant une densité de 0,932, un indice de fusion égal à 80 et un point de fusion de 115,5°C.

## Exemple 10

On opérait en continu dans un réacteur du type autoclave agité muni à sa sortie d'une vanne de régulation de pression.

Dans ce réacteur on introduisait en continu de l'éthylène de manière à obtenir une pression de 1900 bars, l'éthylène renfermant 0,28% molaire d'hydrogène. Dans ce mélange sous pression d'éthylène et d'hydrogène, on injectait en continu et séparément une solution de titanate de tétra n-butyle dans l'heptane avec un débit correspondant à $87.10^{-6}$ mole de titanate par mole d'éthylène, ainsi qu'une solution de dichlorure d'éthylaluminium en solution dans l'heptane avec un débit correspondant à $212.10^{-6}$ mole de dichlorure par mole d'éthylène. La température le long du réacteur montait jusqu'à 245°C. Le mélange réactionnel renfermant le polyéthylène formé et l'éthylène non converti était évacué du réacteur à travers la vanne de régulation de pression et dirigé vers un séparateur pour isoler le polyéthylène. Le temps de séjour du miliau réactionnel dans le réacteur était égal à 32 secondes et les taux de conversion de l'éthylène s'élevait à 15,2%.

On obtenait un polyéthylène présentant une densité de 0,9345, un indice de fusion égal à 100, et un point de fusion de 115°C.

## Exemple 11

On opérait en discontinu dans un réacteur du type autoclave agité et fermé. Dans ledit réacteur maintenu à une température de 174°C, on comprimait 17,5 moles d'éthylène en présence d'hydrogène (1,5% molaire par rapport à l'éthylène) comme agent de transfert de chaînes, puis on introduisait 38 p.p.m. molaires de dichlorure d'éthylaluminium en solution dans l'heptane. La pression dans le réacteur était alors de 1493 bars et la température égale à 176,5°C. Au contenu du réacteur on ajoutait alors 8,4 p.p.m. molaires de titanate de tétraisopropyle en solution dans l'heptane, ce qui provoquait le démarrage de la réaction de polymérisation. La température dans le réacteur s'élevait lentement jusqu'à 196°C, tandis que la pression atteignait un maximum de 1540 bars. Au bout de 15 minutes, la température était revenue à 180,4°C et la pression se stabilisait à 1369 bars, ceci indiquant la fin de la polymérisation.

On recueillait 33.6 g de polyéthylène présentant une densité égale à 0,941, un indice de fusion de 0.05, et un point de fusion égal à 120,5°C.

## Exemple 12

On opérait comme décrit dans l'exemple 1, en remplaçant toutefois le dichlorure d'éthylaluminium par la même quantité molaire de dichlorure de butylaluminium.

On obtenait un polyéthylène ayant une densité de 0,9384, un indice de fusion égal à zéro et un point de fusion de 121°C.

## Revendications

1. Procédé pour la préparation de polymères d'éthylène de moyenne densité, dans lequel on polymérise de l'éthylène ou un mélange d'éthylène et d'une faible quantité d'un comonomère, en masse et sous des pressions d'au moins 800 bars, au moyen d'un système catalytique comprenant un titanate d'alcoyle et un alcoylaluminium de formule $AlY_xR_{(3-x)}$; dans laquelle R représente un radical alcoyle en $C_1$ à $C_6$, x est un nombre allant de 0 à 2,5, et Y désigne un atome d'halogène, caractérisé en ce qu'on effectue la polymérisation à des températures choisies dans l'intervalle allant de $(\theta - 40)$°C à $(\theta + 38)$°C, avec $\theta = 150 + 30x$.

2. Procédé suivant la revendication 1, caractérisé en ce que les pressions utilisées pour la polymérisation peuvent aller de 800 à 3000 bars, et se situent plus particulièrement entre 1000 et 2400 bars.

3. Procédé suivant la revendication 1 ou 2, caractérisé en ce que le titanate d'alcoyle répond à la formule $Ti(OR_1)_4$, dans laquelle les $R_1$, identiques ou différents, désignent des radicaux alcoyles en $C_1$ à $C_6$, et de préférence en $C_2$ à $C_4$.

4. Procédé suivant l'une des revendications 1 à 3, caractérisé en ce que le composé alcoylaluminium répond à la formule $AlCl_xR_{(3-x)}$, dans laquelle R désigne un radical alcoyle en $C_1$ à $C_6$, x est un nombre allant de 0 à 2,5, et de préférence R représente un radical alcoyle en $C_2$ à $C_4$ et x désigne un nombre prenant les valeurs 0, 1, 3/2, et 2.

5. Procédé suivant l'une des revendications 1 à 4, caractérisé en ce que les proportions relatives du constituant titanate et du constituant alcoylaluminium, associés pour former le système catalytique, sont telles que le rapport du nombre d'atomes d'aluminium au nombre d'atomes de titane est compris entre 1 et 10, et de préférence entre 2 et 8.

6. Procédé suivant l'une des revendications 1 à 5, caractérisé en ce que la quantité de système catalytique à utiliser est telle qu'il y ait $5.10^{-6}$ à $200.10^{-6}$, et de préférence $8.10^{-6}$ à $100.10^{-6}$ atome de titane par molécule d'éthylène dans le mélange réactionnel à polymériser.

7. Procédé suivant l'une des revendications 1 à 6, caractérisé en ce que, le composé alcoylaluminium ayant la formule $Al(R)_3$ avec R désignant un radical alcoyle en $C_1$ à $C_6$ et de préférence en $C_2$ à $C_4$, les températures de polymérisation sont choisies entre 120°C et 188°C, et de préférence entre 130°C et 185°C.

8. Procédé suivant l'une des revendications 1 à 6, caractérisé en ce que, le composé alcoylaluminium ayant la formule $AlCl(R)_2$ avec R désignant un radical alcoyle en $C_1$ à $C_6$ et de préférence en $C_2$ à $C_4$, les températures de polymérisation sont choisies entre 150°C et 210°C et de préférence entre 160°C et 200°C.

9. Procédé suivant l'une des revendications 1 à 6, caractérisé en ce que, le composé alcoyl-aluminium ayant la formule $AlCl_2R$ avec R désignant un radical alcoyle en $C_1$ à $C_6$ et de préférence en $C_2$ à $C_4$, les températures de polymérisation sont comprises entre 170°C et 248°C et de préférence entre 190°C et 248°C.

10. Polymères d'éthylène, et plus particulièrement polyéthylènes, de moyenne densité obtenus par le procédé suivant l'une des revendications 1 à 9.

## Patentansprüche

1. Verfahren zur Herstellung von Ethylenpolymeren mittlerer Dichte, wobei Ethylen oder ein Gemisch aus Ethylen und einer geringen Menge eines Comonomers in Masse und bei einem Druck von mindestens 800 bar unter Verwendung eines Alkyltitanat und ein Alkylaluminium der Formel $AlY_xR_{(3-x)}$, worin R einen $C_1$—$C_6$-Alkylrest, x 0 bis 2,5 und Y ein Halogenatom darstellen, enthaltenden Katalysators polymerisiert wird, dadurch gekennzeichnet, daß die Polymerisation bei Temperaturen im Bereich von $(\theta - 40)$°C bis $(\theta + 38)$°C, wobei $\theta = 150 + 30x$, durchgeführt wird.

2. Verfahren nach Anspruch 1, dadurch gekennzeichnet, daß die zur Polymerisation verwendeten Drücke im Bereich von 800 bis 3000 bar liegen können und insbesondere zwischen 1000 und 2400 bar liegen.

3. Verfahren nach Anspruch 1 oder 2, dadurch gekennzeichnet, daß das Alkyltitanat die Formel $Ti(OR_1)_4$ aufweist, worin die Substituenten $R_1$, gleich oder verschieden, $C_1$—$C_6$-Alkylreste, vorzugsweise $C_2$—$C_4$-Alkylreste, darstellen.

4. Verfahren nach einem der Ansprüche 1 bis 3, dadurch gekennzeichnet, daß die Alkylaluminiumverbindung die Formel $AlCl_xR_{(3-x)}$ aufweist, worin R einen $C_1$—$C_6$-Alkylrest und x 0 bis 2,5 darstellen, vorzugsweise R einen $C_2$—$C_4$-Alkylrest und x 0, 1, 3/2 und 2 darstellen.

5. Verfahren nach einem der Ansprüche 1 bis 4, dadurch gekennzeichnet, daß die relativen Mengenanteile des zur Herstellung des Katalysators verwendeten Titanat- und des Alkylaluminiumbestandteils so gewählt werden, daß das Atomzahlverhältnis von Aluminium zu Titan zwischen 1 und 10, vorzugsweise zwischen 2 und 8, liegt.

6. Verfahren nach einem der Ansprüche 1 bis 5, dadurch gekennzeichnet, daß die Menge des zu verwendenden Katalysators so gewählt wird, daß $5.10^{-6}$ bis $200.10^{-6}$, vorzugsweise $8.10^{-6}$ bis $100.10^{-6}$, Titanatom pro Ethylenmolekül im zu polymerisierenden Reaktionsgemisch enthalten sind.

7. Verfahren nach einem der Ansprüche 1 bis 6, dadurch gekennzeichnet, daß bei Verwendung der Alkylaluminiumverbindung der Formel $Al(R)_3$, worin R eine $C_1$—$C_6$-Alkylrest, vorzugsweise einen $C_2$—$C_4$-Alkylrest, darstellt, die Polymerisationstemperatur im Bereich zwischen 120°C und 188°C, vorzugsweise zwischen 130°C und 185°C, liegt.

8. Verfahren nach einem der Ansprüche 1 bis 6, dadurch gekennzeichnet, daß bei Verwendung der Alkylaluminiumverbindung der Formel $AlCl(R)_2$, worin R einen $C_1$—$C_6$-Alkylrest, vorzugsweise einen $C_2$—$C_4$-Alkylrest, darstellt, die Polymerisationstemperatur im Bereich zwischen 150°C und 210°C, vorzugsweise zwischen 160°C und 200°C, liegt.

9. Verfahren nach einem der Ansprüche 1 bis 6, dadurch gekennzeichnet, daß bei Verwendung der Alkylaluminiumverbindung der Formel $AlCl_2R$, worin R einen $C_1$—$C_6$-Alkylrest, vorzugsweise einen $C_2$—$C_4$-Alkylrest, darstellt, die Polymerisationstemperatur im Bereich zwischen 170°C und 248°C, vorzugsweise zwischen 190°C und 248°C, liegt.

10. Nach dem Verfahren nach einem der Ansprüche 1 bis 9 erhaltene Ethylenpolymere, insbesondere Polyethylene, mittlerer Dichte.

## Claims

1. A process for the preparation of medium density ethylene polymers by bulk polymerization of ethylene or a mixture of ethylene and a small amount of comonomer, under pressures of at least 800 bars in the presence of a catalytic system containing an alkyl titanate and an alkylaluminium having the formula $AlY_xR_{(3-x)}$ in which R is a $C_1$ to $C_6$ alkyl radical, x is a number ranging from 0 to 2.5 and Y is a halogen atom, said process being characterized in that the polymerization is carried out at temperatures selected in the range of $(\theta - 40)$°C to $(\theta + 38)$°C wherein $\theta = 150 + 30x$.

2. A process according to claim 1, characterized in that the pressures of polymerization are in the range of 800 to 3000 bars and more particularly between 1000 and 2400 bars.

3. A process according to claim 1 or 2, characterized in that the alkyl titanate is of the formula $Ti(OR_1)_4$ in which $R_1$ represents $C_1$ to $C_6$ alkyl radicals and preferably $C_2$ to $C_4$ alkyl radicals, said radicals being identical or different.

4. A process according to any of claims 1 to 3, characterized in that the alkylaluminium compound is of the formula $AlCl_xR_{(3-x)}$ wherein R is a $C_1$ to $C_6$ alkyl radical and x is a number ranging from 0 to 2.5, and preferably R is a $C_2$ to $C_4$ alkyl radical and x is either 0, 1, 3/2 or 2.

5. A process according to any of claims 1 to 4, characterized in that the relative proportions of the titanate constituent and the alkylaluminium constituent, combined in order to form the catalytic system, are such that the ratio of the number of aluminium atoms to the number of titanium atoms is between 1 and 10 and preferably between 2 and 8.

6. A process according to any of claims 1 to 5, characterized in that the quantity of the catalytic system is such that there is $5 \times 10^{-6}$ to $200 \times 10^{-6}$ titanium atom, and preferably $8 \times 10^{-6}$ to $100 \times 10^{-6}$ titanium atom, per

ethylene molecule in the reaction mixture to be polymerized.

7. A process according to any of claims 1 to 6, characterized in that the alkylaluminium compound is of the formula $Al(R)_3$ where R is a $C_1$ to $C_6$ alkyl radical, and preferably a $C_2$ to $C_4$ alkyl radical, and the polymerization temperatures are between 120°C and 188°C and preferably between 130°C and 180°C.

8. A process according to any of claims 1 to 6, characterized in that the alkylaluminium compound is of the formula $AlCl(R)_2$ where R is a $C_1$ to $C_6$ alkyl radical, and preferably a $C_2$ to $C_4$ alkyl radical, and the polymerization temperatures are between 150°C and 210°C and preferably between 160°C and 200°C.

9. A process according to any of claims 1 to 6, characterized in that the alkylaluminium compound is of the formula $AlCl_2R$ where R is a $C_1$ to $C_6$ alkyl radical, and preferably a $C_2$ to $C_4$ alkyl radical, and the polymerization temperatures are between 170°C and 248°C and preferably between 190°C and 248°C.

10. Ethylene polymers, and more particularly polyethylenes, of medium density whenever obtained by the process according to any of claims 1 to 9.